# EUROPÄISCHE PATENTSCHRIFT

(11) **EP 0 625 106 B1**
(45) Veröffentlichungstag und Bekanntmachung des Hinweises auf die Patenterteilung: **11.09.1996**
(21) Anmeldenummer: 93903221.5
(22) Anmeldetag: 22.01.1993
(51) Int. Cl.: B60T 8/32

(54) **SCHLUPFGEREGELTE BREMSANLAGE**
SLIP-CONTROLLED BRAKE SYSTEM
SYSTEME DE FREINAGE ANTIPATINAGE

(30) Priorität: 11.02.1992 DE 4203878
(43) Veröffentlichungstag der Anmeldung: 23.11.1994
(73) Patentinhaber: ITT Automotive Europe GmbH, D-60488 Frankfurt am Main (DE)
(72) Erfinder: VOLZ, Peter, D-6100 Darmstadt (DE); BECK, Erhard, D-6290 Weilburg (DE)
(86) Internationale Anmeldenummer: EP9300142
(87) Internationale Veröffentlichungsnummer: WO9315940

(56) Entgegenhaltungen:
- DE-A- 3 842 699
- DE-A- 3 922 082
- DE-A- 3 932 531
- DE-A- 4 003 328
- DE-A- 4 019 347
- DE-A- 4 023 708
- DE-A- 4 106 790

## Beschreibung

Die Erfindung geht von einer schlupfgeregelten hydraulischen Bremsanlage aus, entsprechend dem Oberbegriff des Hauptanspruches.

Eine solche Bremsanlage ist aus der DE- 38 42 699 A1 bekannt. Die darin beschriebene Bremsanlage besitzt zur Vermeidung von lauten Schaltgeräuschen an den Einlaßventilen vor jedem Einlaßventil einen Differenzdruckbegrenzer, der jeweils dann eine weitere Druckmittelzufuhr zu den Einlaßventilen sperrt, wenn der Druck oberhalb der Einlaßventile den Druck in den Radbremsen um einen bestimmten Betrag überschreitet. Diese Maßnahme hat sich als wirkungsvoll erwiesen, denn durch die begrenzte Druckdifferenz oberhalb und unterhalb der Einlaßventile wurden die Schaltgeräusche erheblich reduziert. Es ist jedoch von Nachteil, daß durch den Einbau von vier Differenzdruckbegrenzern die Bremsanlage erheblich verteuert und verkompliziert wird.

Die in der DE 40 03 328 A1 beschriebene Bremsanlage kommt mit insgesamt drei Differenzdruckbegrenzern aus. Für die Radbremsen der Vorderachse, welche jeweils mit einem eigenen Einlaß- und Auslaßventil versehen sind, ist auch jeweils ein Differenzdruckbregrenzer vorgesehen. Der Bremsdruck in den Radbremsen der Hinterachse kann indes nicht radindividuell geregelt werden, da für beide Radbremsen der Hinterachse nur jeweils ein gemeinsames Einlaß- und Auslaßventil vorgesehen ist. Dementsprechend wird für diese gemeinsame Bremsleitung zur Hinterachse auch nur ein Differenzdruckbegrenzer benötigt. Gegenüber der DE 38 42 699 A1 ergibt sich jedoch durch die gemeinsame Regelung der Hinterachsbremsen eine Einbuße der Regelqualität.

Die Aufgabe der vorliegenden Erfindung liegt darin, ohne Einschränkung der Funktionssicherheit der Bremsanlage eine einfachere Anordnung zur Geräuschminderung zu schaffen.

Diese Aufgabe wird gelöst durch die kennzeichnenden Merkmale des Hauptanspruches. Das Prinzip der Erfindung besteht also darin, daß für mehrere Radbremsen ein gemeinsamer Differenzdruckbegrenzer vorgesehen ist. Da jeweils nur einer der Radbremsdrücke als Referenzdruck wirken kann, ist zwischen die Steuerleitungen und den Differenzdruckbegrenzer ein Druckselektor eingefügt, der jeweils nach den Druckverhältnissen in den Radbremsen einen der beiden Radbremsdrücke auswählt, welcher als Referenzdruck dienen soll.

Wenn der Druckselektor jeweils den niedrigsten der Radbremsdrücke wie in Anspruch 2 angegeben auswählt, dann sind die Schaltgeräusche gegenüber der Auswahl des größten der Radbremsdrücke, wie in Anspruch 3 beschrieben, vermindert. Es kann jedoch je nach Auslegung der Bremsanlage möglicherweise zu einer Unterbremsung kommen. Daher ist es von der Bremsanlage abhängig, welches Auswahlkriterium Anwendung finden soll.

Diese Art der Geräuschminderung hat sich besonderes in solchen Bremsanlagen erwiesen, in denen ein Hochdruckspeicher vorhanden ist, der bei der Antriebsschlupfregelung die Radbremsen mit Druckmittel versorgt, da der Druck ruckartig sofort an den Einlaßventilen ansteht.

Die Erfindung ist aber auch auf alle anderen Bremsanlagen anwendbar, die mit einer Hilfsdruckquelle, beispielsweise einer Pumpe ausgestattet sind.

Weitere vorteilhafte Merkmale ergeben sich aus der Beschreibung eines bevorzugten Ausführungsbeispiels einer erfindungsgemäßen Bremsanlage anhand von drei Zeichnungen.

Es zeigt:
- Fig. 1: eine erfindungsgemäße Bremsanlage;
- Fig. 2: einen Differenzdruckbegrenzer mit vorgeschaltetem Druckselektor, wie in der Bremsanlage nach Fig. 1 verwendet;
- Fig. 3: eine andere Gestaltung des Druckselektors.

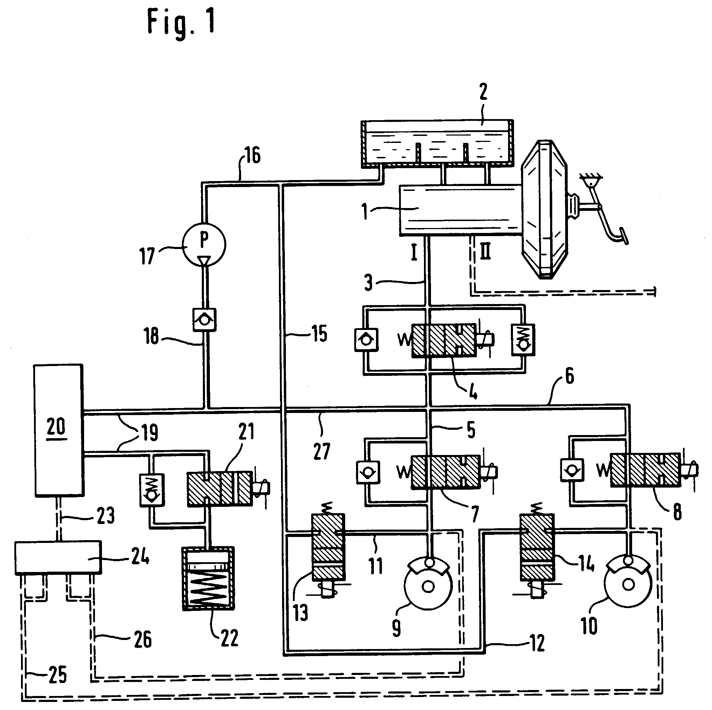

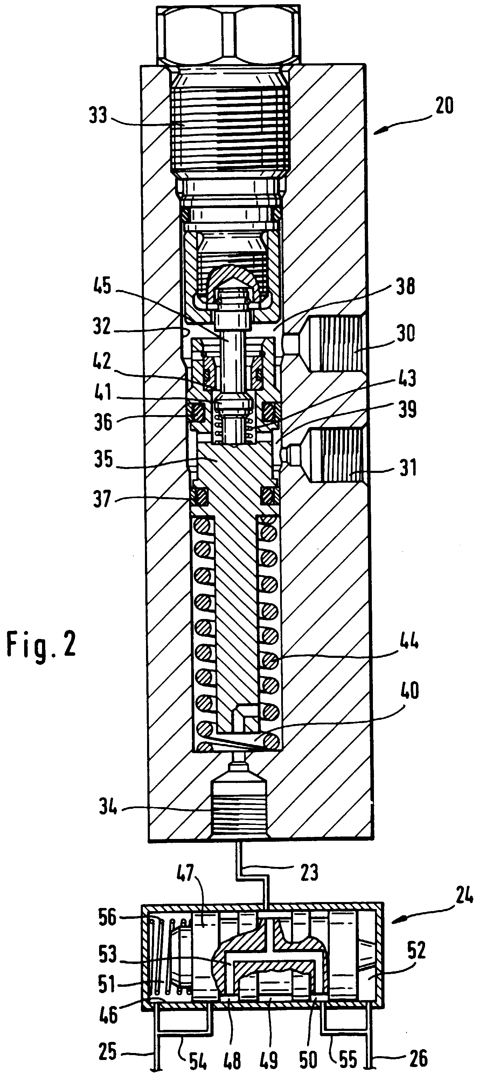

Die Bremsanlage nach Fig. 1 besitzt einen Hauptbremszylinder 1, der mit dem Druckmittelbehälter 2 in Verbindung steht. Vom Hauptbremszylinder 1 werden die Bremskreise I und II mit Druckmittel versorgt, von denen nur Bremskreis I dargestellt ist. Die Bremsleitung 3 führt vom Hauptbremszylinder 1 über das Trennventil 4 in zwei Bremszweigleitungen 5 und 6, die jeweils über die Einlaßventile 7 bzw. 8 zu den Radbremsen 9 und 10 führen. Von den Radbremsen 9 und 10 verläuft jeweils eine Rücklaufzweigleitung 11 bzw. 12 über ein Auslaßventil 13 bzw. 14 in die gemeinsame Rücklaufleitung 15, die zum Druckmittelbehälter 2 führt. An den Druckmittelbehälter 2 ist ebenfalls die Pumpe 17 über die Saugleitung 16 angeschlossen. Die Pumpe 17 fördert in die Pumpleitung 18, die sich in die Speicherleitung 19 und die Hilfsdruckleitung 27 aufteilt. Während die Hilfsdruckleitung 27 in die Bremsleitung 3 zwischen Trennventil 4 und den Einlaßventilen mündet, führt die Speicherleitung 19 über den Differenzdruckbegrenzer 20 und das Speicherladeventil 21 zum Druckspeicher 22. Der Differenzdruckbegrenzer 20, der in Fig. 2 detailliert dargestellt ist, bekommt seinen Steuerdruck über die Referenzdruckleitung 23, die eine Steuerkammer des Differenzdruckbegrenzers 20 mit dem Druckselektor 24 verbindet. Der dem Differenzdruckbegrenzer 20 zugeführte Steuerdruck entspricht dem in einer der Steuerleitungen 25 oder 26, welche von den Radbremsen 9 bzw. 10 zum Druckselektor 24 führen.

Bevor die Funktionsweise der gesamten Bremsanlage beschrieben wird, soll zunächst anhand von Fig. 2 der Differenzdruckbegrenzer 20 mit dem Druckselektor 24 erläutert werden.

Der Differenzdruckbegrenzer 20 ist mit seinem Einlaß 30 an die Druckseite der Pumpe angeschlossen, während sein Auslaß 31 zum Druckspeicher 22 führt. Einlaß 30 und Auslaß 31 münden in die gestufte Bohrung 32, die an ihrem Ende größeren Querschnitts mit dem Stopfen 33 druckdicht verschlossen ist und an ihrem Ende kleineren Querschnitts mit dem Druckmittelanschluß 34 an die Referenzdruckleitung 23 angeschlossen ist. In der Bohrung 32 ist der ebenfalls gestufte Kolben 35 axial verschiebbar geführt. Dabei ist er an seinem größeren und an seinem kleineren Umfang jeweils durch eine Gummidichtung 36 bzw. 37 gegen die Bohrungswand abgedichtet. Am Kolbenende größeren Querschnitts befindet sich die Einlaßkammer 38, am Kolbenende kleineren Querschnitts befindet sich die Steuerkammer 40 und dazwischen die Auslaßkammer 39. Zwischen Einlaßkammer 38 und Auslaßkammer 31 ist im Kolben 35 ein Ventil 41/42 angeordnet. Das Ventilschließglied 41 wird von der Ventilfeder 43 in Richtung auf den Ventilsitz 42 beaufschlagt. Da jedoch auf den Kolben 35 von der Steuerkammer 40 her die Druckfeder 44 in Öffnungsrichtung einwirkt, befindet sich das Ventilschließglied 41 mit seinem Stößel 45 im Anschlag am Stopfen 33, und ist vom Ventilsitz 42 abgehoben.

Der Druckselektor 24, der über die Referenzdruckleitung 23 mit der Steuerkammer 40 verbunden ist, besitzt in einer Bohrung 46 einen Schwimmkolben 47, der mit drei Ringnuten 48,49 und 50 versehen ist. Die durch Ringnuten 48,49 und 50 definierten Ringräume sind durch im Schwimmkolben 47 verlaufende Kanäle 53 miteinander verbunden. Die an den Stirnseiten des Schwimmkolbens befindlichen Stirnkammern 51 und 52 sind jeweils an eine der Steuerleitungen 25 und 26 angeschlossen. Von diesen Steuerleitungen 25 und 26 führt jeweils eine Steuerzweigleitung 54 bzw. 55 radial bis zur Bohrung 46. Der axiale Abstand der Einmündungen der beiden Steuerzweigleitungen 54 und 55 ist so bemessen, daß jeweils nur eine der beiden über eine der Ringnuten 48 oder 50 und die Ringnut 49 mit der Steuerkammer 40 in Verbindung stehen kann. In der abgebildeten Ausführungsform wirkt der Druckselektor als Minimaldruckselektor. Das heißt, daß er jeweils den niedrigeren der beiden Drücken in der Steuerleitungen zum Differenzdruckbegrenzer durchläßt. Der Schwimmmkolben 47 wird von der schwachen Druckfeder 56 an eine Stirnwand gedrückt. Diese Druckfeder definiert jedoch lediglich eine Nullstellung des Kolbens und ihre Auswirkung auf das Verhalten des Druckselektors sind zu vernachlässigen.

Der hier dargestellte Minimaldruckselektor 24 läßt sich übrigens auf einfache Weise in einen Maximaldruckselektor umwandeln, in dem der Abstand der Einmüdungen der Steuerzweigleitungen etwas verringert wird, so daß in der hier dargestellten Position die Steuerzweigleitung 54 in die Ringnut 48 mündet, während die Steuerzweigleitung 55 gesperrt ist.

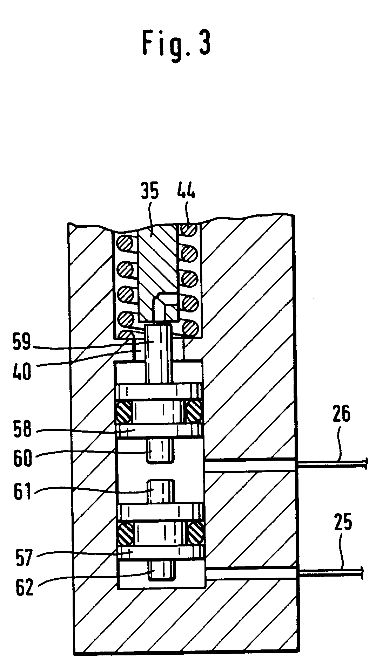

In Fig. 3 ist eine weitere Ausführungsform eines Druckselektors dargestellt. Er arbeitet als Maximaldruckselektor und ist kolinear zum Kolben 35 des Differenzdruckbegrenzers angeordnet. Er besitzt im wesentlichen zwei Schwimmkolben 57 und 58 die abgedichtet und axial verschiebbar geführt sind. Sie sind jeweils mit axialen Abstandsstößeln 59 und 60 bzw. 61 und 62 versehen, so daß sie sich nicht vollständig an eine Stirnwand oder aneinander flächig anlegen können. Wenn in der Steuerleitung 25 der Druck größer ist als in Steuerleitung 26, so drückt der Schwimmkolben 57 den Schwimmkolben 58 gegen den Kolben 35. Der Druck in der Steuerkammer 40 erhöht sich, bis er gleich dem Druck in der Steuerleitung 25 ist. Dagegen bleibt der Druck in der Steuerleitung 26 aufgrund der Abstandsstößel 60 konstant, weil keine wesentliche Volumenverkleinerung erfolgen kann. Ist der Druck in der Steuerleitung 26 jedoch größer als der in Steuerleitung 25, so wird der Schwimmkolben 57 an das Bohrungsenede gedrückt und der Schwimmkolben 58 wie zuvor gegen den Kolben 35.

Die Funktionsweise der Bremsanlage im normalen Bremsbetrieb und während einer Blockierschlupfregelung ist aus dem Stand der Technik bekannt. Die Vorteile der Erfindung zeigen sich besonders während einer Antriebsschlupfregelung, wenn plötzlich vom Druckspeicher 22 die Radbremsen 9 und 10 gefüllt werden sollen. Dann nämlich steht ohne Differenzdruckbegrenzer 20 der volle Speicherdruck an den Einlaßventilen 7 und 8 an, während unterhalb der Einlaßventile Atmosphärendruck herrscht. Mit Differenzdruckbegrenzer 20 jedoch laufen folgende Vorgänge ab:

Die Radbremsen 9 und 10 stehen unter Atmosphärendruck. Eines der beiden zugehörigen Räder neigt zum Durchdrehen. Der Druckselektor gibt Atmosphärendruck an die Steuerkammer 40 des Differenzdruckbegrenzers 20 weiter. Das Speicherladeventil 21 öffnet, so daß in den Kammern 38 und 39 der volle Speicherdruck ansteht. Das Ventil 41/42 schließt sich, da der Kolben 35 sich unter dem Speicher- druck nach unten bewegt. Durch die Druckfeder 44 bestimmt eine Schließdruckdifferenz, die einerseits ausreichend zur Antriebsschlupfregelung ist und andererseits niedrig genug ist, um die Schaltgeräusche der Einlaßventile 7 und 8 deutlich zu mindern. Da das Volumen des Druckspeichers 22 so groß bemessen ist, daß es für mehrere Regelzyklen ausreichend ist, wird es nur sehr selten erforderlich sein, während einer Antriebsschlupfregelung von der Pumpe 17 Druckmittel nachfördern zu lassen. Nur in einem solchen Fall aber würden die Schaltgeräusche der Einlaßventile 7 und 8 wieder lauter, da zwischen Pumpe und Einlaßventilen kein Differenzdruckbegrenzer eingesetzt ist. Andererseits könnte dies sogar von Vorteil sein, weil es sich dann um einen dauerhaften instabilen Zustand handelt und der Fahrer auf diese Weise ein feedback bekommt. Nach Beendigung der Antriebsschlupfregelung wird der Druckspeicher 22 von der Pumpe 17 wieder aufgefüllt. und die Bremsanlage ist wieder betriebsbereit für eine geräuschgedämpfte Antriebsschlupfregelung.

### Bezugszeichenliste

- 1: Hauptbremszylinder
- 2: Druckmittelbehälter
- 3: Bremsleitung
- 4: Trennventil
- 5: Bremszweigleitung
- 6: Bremszweigleitung
- 7: Einlaßventil
- 8: Einlaßventil
- 9: Radbremse
- 10: Radbremse
- 11: Rücklaufzweigleitung
- 12: Rücklaufzweigleitung
- 13: Auslaßventil
- 14: Auslaßventil
- 15: Rücklaufleitung
- 16: Saugleitung
- 17: Pumpe
- 18: Pumpleitung
- 19: Speicherleitung
- 20: Differenzdruckbegrenzer
- 21: Speicherladeventil
- 22: Druckspeicher
- 23: Referenzdruckleitung
- 24: Druckselektor
- 25: Steuerleitung
- 26: Steuerleitung
- 27: Hilfsdruckleitung
- 30: Anschnluß
- 31: Anschluß
- 32: Bohrung
- 33: Stopfen
- 34: Druckmittelanschluß
- 35: Kolben
- 36: Gummidichtung
- 37: Gummidichtung
- 38: Kammer
- 39: Kammer
- 40: Steuerkammer
- 41: Ventilshließglied
- 42: Ventilsitz
- 43: Ventilfeder
- 44: Druckfeder
- 45: Stößel
- 46: Bohrung
- 47: Schwimmkolben
- 48: Ringnut
- 49: Ringnut
- 50: Ringnut
- 51: Stirnkammer
- 52: Stirnkammer
- 53: Kanäle
- 54: Steuerzweigleitung
- 55: Steuerzweigleitung
- 56: Druckfeder

## Patentansprüche

1. Schlupfgeregelte hydraulische Bremsanlage mit mindestens zwei Radbremsen (9,10) und einer Hilfsdruckquelle (17), wobei von der Hilfsdruckquelle (12) den Radbremsen (9,10) über je ein Einlaßventil (7,8) Druckmittel zuführbar ist und zwischen Hilfsdruckquelle (17) und Einlaßventilen (7,8) ein Differenzdruckbegrenzer (20) eingebaut ist, der den von der Hilfsdruckquelle (22) den Einlaßventilen (7,8) zugeführten Druck den in den Radbremsen (9,10) herrschenden Druck nur um einen bestimmten Betrag übersteigen läßt, dadurch **gekennzeichnet**, daß für alle Radbremsen (9,10) ein gemeinsamer Differenzdruckbegrenzer (20) vorgesehen ist und daß von jeder Radbremse (9,10) eine Steuerleitung (25,26) zu einem Druckselektor (24) führt, der einen der Radbremsdrücke dem Differenzdruckbegrenzer (20) als Referenzdruck zuführt.

2. Schlupfgeregelte hydraulische Bremsanlage nach Anspruch 1, dadurch **gekennzeichnet**, daß der Druckselektor (24) eine Kolben-Zylinder-Anordnung ist, welche jeweils den niedrigsten der in den Steuerleitungen (25,26) herrschenden Drücke dem Differenzdruckbegrenzer (20) zuführt.

3. Schlupfgeregelte hydraulische Bremsanlage nach Anspruch 1, dadurch **gekennzeichnet**, daß der Druckselektor (Fig.3) eine Kolben-Zylinder-Anordnung ist, welche jeweils den höchsten der in den Steuerleitungen (25,26) herrschenden Drücke dem Differenzdruckbegrenzer zuführt.

4. Schlupfgeregelte hydraulische Bremsanlage nach einem der vorhergehenden Ansprüche, dadurch **gekennzeichnet**, daß die Hilfsdruckquelle ein Druckspeicher (22) ist, der von einer Pumpe (17) durch eine Speicherleitung (19) füllbar ist, wobei in der Speicherleitung (19) der Differenzdruckbegrenzer (20) angeordnet ist.

5. Schlupfgeregelte hydraulische Bremsanlage nach einem der vorhergehenden Ansprüche, dadurch **gekennzeichnet**, daß der Differenzdruckbegrenzer (20) in einer Bohrung (32) einen axial verschiebbaren gestuften Kolben (35) aufweist, welcher an seinem kleinen und großen Umfang jeweils gegen die Bohrungswand abgedichtet ist,
daß die Abdichtungen (36,37) am Kolbenende kleineren Querschnitts eine Steuerkammer (40), am Kolbenende größeren Querschnitts eine erste Kammer (38) und zwischen den Abdichtungen eine zweite Kammer (39) begrenzten,
daß zwischen erster und zweiter Kammer ein Ventil (41,42) eingefügt ist, welches bei Bewegung des Kolbens (35) durch Steuerkammer (45) hin schließt, und daß er Kolben (35) in Ventilöffnungsrichtung von einer in der Steuerkammer (40) angeordneten Druckfeder (44) beaufschlagt ist.

## Claims

1. Slip-controlled hydraulic brake system having at least two wheel brakes (9, 10) and an auxiliary-pressure source (17), wherein pressure fluid can be supplied from the auxiliary-pressure source (12) to the wheel brakes (9, 10) by means of one inlet valve (7, 8), respectively, and wherein a differential pressure limiter (20) is interposed between the auxiliary-pressure source (17) and the inlet valves (7, 8) permitting rise of the pressure supplied from the auxiliary-pressure source (22) to the inlet valves (7, 8) in excess of the pressure prevailing in the wheel brakes (9, 10) only by a predetermined amount,
**characterized** in that for all wheel brakes (9, 10) one joint differential pressure limiter (20) is provided, and in that from each wheel brake (9, 10) one control line (25, 26) leads to a pressure selector (24) which delivers one of the wheel braking pressures as a reference pressure to the differential pressure limiter (20).

2. Slip-controlled hydraulic brake system as claimed in claim 1,
**characterized** in that the pressure selector (24) is a piston-and-cylinder assembly which delivers in each case the lowest of the pressures prevailing in the control lines (25, 26) to the differential pressure limiter (20).

3. Slip-controlled hydraulic brake system as claimed in claim 1,
**characterized** in that the pressure selector (Figure 3) is a piston-and-cylinder assembly which delivers in each case the highest of the pressures prevailing in the control lines (25, 26) to the differential pressure limiter.

4. Slip-controlled hydraulic brake system as claimed in any one of the preceding claims,
**characterized** in that the auxiliary-pressure source is a pressure accumulator (22) which can be filled by a pump (17) through an accumulator line (19), the differential pressure limiter (20) being arranged in the accumulator line (19).

5. Slip-controlled hydraulic brake system as claimed in any one of the preceding claims,
**characterized** in that the differential pressure limiter (20) in a bore (32) includes an axially slidable stepped piston (35) which, at its small and its large periphery, is respectively sealed in relation to the bore wall,
in that the seals (36, 37) confine a control chamber (40) at the piston end of small cross-section, a first chamber (38) at the piston end of larger cross-section and a second chamber (39) between the seals,
in that a valve (41, 42) is interposed between the first and the second chamber and closes when the piston (35) moves towards the control chamber (45), and in that, in the valve's opening direction, the piston (35) is acted upon by a compression spring (44) arranged in the control chamber (40).

## Revendications

1. Système hydraulique de freinage à régulation du glissement, comprenant au moins deux freins de roue (9, 10) et une source de pression auxiliaire (17), dans lequel de l'agent de pression peut être envoyé de la source de pression auxiliaire (12) respectivement à chacun des freins de roue (9, 10) par l'intermédiaire d'une valve d'entrée (7, 8) associée et un limiteur de pression différentielle (20) est inséré entre la source de pression auxiliaire (17) et les valves d'entrée (7, 8), le limiteur de pression différentielle (20) ne laissant s'élever la pression envoyée par la source de pression auxiliaire (22) aux valves d'entrée (7, 8) au-dessus de la pression régnant dans les freins de roue (9, 10) que d'une valeur déterminée, caractérisé en ce qu'un limiteur de pression différentielle (20) commun est prévu pour tous les freins de roue (9,10) et en ce qu'à partir de chaque frein de roue (9, 10), une conduite de commande (25, 26) mène à un sélecteur de pression (24) qui envoie l'une des pressions de frein de roue, en tant que pression de référence, au limiteur de pression différentielle (20).

2. Système hydraulique de freinage à régulation du glissement selon la revendication 1, caractérisé en ce que le sélecteur de pression (24) est un ensemble piston-cylindre qui, à chaque instant, envoie au limiteur de pression différentielle (20) la plus faible des pressions régnant dans les conduites de commande (25, 26).

3. Système hydraulique de freinage à régulation du glissement selon la revendication 1, caractérisé en ce que le sélecteur de pression (figure 3) est un ensemble piston-cylindre qui, à chaque instant, envoie au limiteur de pression différentielle la plus élevée des pressions régnant dans les conduites de frein (25, 26).

4. Système hydraulique de freinage à régulation du glissement selon l'une des revendications précédentes, caractérisé en ce que la source de pression auxiliaire est un accumulateur de pression (22) qui est agencé de façon à pouvoir être rempli par une pompe (17) par l'intermédiaire d'une conduite d'accumulateur (19), tandis que le limiteur de pression différentielle (20) est disposé dans la conduite d'accumulateur (19).

5. Système hydraulique de freinage à régulation du glissement selon l'une des revendications précédentes, caractérisé en ce que le limiteur de pression différentielle (20) comprend, dans un alésage (32), un piston étagé (35) axialement coulissant dont l'étanchéité vis-à-vis de la paroi de l'alésage est assurée respectivement à l'endroit de sa petite surface périphérique et à l'endroit de sa grande surface périphérique,
en ce que les garnitures d'étanchéité (36, 37) délimitent une chambre de commande (40) à l'extrémité de plus petite section transversale du piston, une première chambre (38) à l'extrémité de plus grande section transversale du piston et une seconde chambre (39) entre les garnitures d'étanchéité,
en ce qu'une valve (41, 42), qui se ferme lors d'un déplacement du piston (35) dans la chambre de commande (45), est insérée entre la première et la seconde chambres
et en ce que le piston (35) est soumis à l'action d'un ressort de compression (44), disposé dans la chambre de commande (40), dans le sens d'ouverture de la valve.
